# FASCICULE DE BREVET EUROPEEN

(11) **EP 2 435 716 B1**
(45) Date de publication et mention de la délivrance du brevet: **25.02.2015**
(21) Numéro de dépôt: 10724019.4
(22) Date de dépôt: 26.05.2010
(51) Int. Cl.: F15B 15/19, F16B 31/00, B64G 1/64, F42B 15/38

(54) **DISPOSITIF DE LIAISON PROVISOIRE ET DE SÉPARATION PYROTECHNIQUE DE DEUX ENSEMBLES**
VORRICHTUNG ZUM VORÜBERGEHENDEN VERBINDEN UND PYROTECHNISCHEN TRENNEN ZWEIER ANORDNUNGEN
DEVICE FOR TEMPORARILY CONNECTING AND PYROTECHNICALLY SEPARATING TWO ASSEMBLIES

(30) Priorité: 29.05.2009 FR 0953569
(43) Date de publication de la demande: 04.04.2012
(73) Titulaire: Airbus Defence and Space SAS, 78130 Les Mureaux (FR)
(72) Inventeur: KISTER, Thomas, F-78740 Vaux-sur-Seine (FR); CLAUDEL, Sylvain, F-33160 St Medard en Jalles (FR)
(74) Mandataire: Ilgart, Jean-Christophe
(86) Numéro de dépôt international: PCT/EP2010/057251
(87) Numéro de publication internationale: WO 2010/136494

(56) Documents cités:
- EP-A1- 0 472 453
- EP-A1- 0 962 742
- EP-A2- 0 816 061
- FR-A1- 2 779 222
- US-A- 4 648 227
- US-A1- 2008 163 748

## Description

### DOMAINE TECHNIQUE ET ART ANTÉRIEUR

La présente invention se rapporte à un dispositif de liaison provisoire et de séparation pyrotechnique de deux ensembles.

Un tel dispositif peut notamment être utilisé dans l'industrie aéronautique et spatiale, pour relier provisoirement deux ensembles structurels et pour commander en un temps très bref leur séparation.

Dans le domaine spatial, de tels dispositifs sont montés, par exemple sur les parties hautes des lanceurs, ou peuvent être utilisés pour la séparation de deux étages d'un lanceur ou, pour la découpe des structures porteuses de satellites.

D'une part, ces dispositifs sont destinés à assurer une liaison entre deux éléments de sorte à les rendre solidaires. Dans le cas des lanceurs, ils sont aptes à tenir les efforts de traction et de compression longitudinaux entre les deux éléments assemblés. D'autre part, ils sont destinés à assurer une séparation fiable des deux éléments en limitant les nuisances, telles que les pollutions solides, gazeuses, et les chocs induits vers les équipements du lanceur et la charge utile transportée, telle qu'un satellite.

Ce type de dispositif est bien connu de l'état de la technique. Certains dispositifs mettent en oeuvre la découpe de la matière, généralement métallique, formant la liaison entre les deux ensembles accouplés, au moyen d'une charge pyrotechnique. Cependant, du fait des efforts importants à exercer pour découper le matériau, les niveaux de choc engendrés sont très élevés et sont vus par les éléments voisins de la zone de séparation, comme les étages, l'équipement et/ou la charge utile, ce qui peut leur être préjudiciable. Des dispositifs dissipateurs de choc peuvent être prévus pour réduire les niveaux de chocs subits par l'environnement, cependant ces dispositifs augmentent la masse de l'ensemble.

Un autre exemple d'un tel dispositif est décrit dans le document FR 2 779 222. Ce dispositif comporte deux ensembles à assembler provisoirement et à séparer, ces deux ensembles étant fixés l'un à l'autre au moyen d'une bande collée sur les deux ensembles. Un tube d'expansion pyrotechnique est disposé dans un logement ménagé au niveau de la liaison, et provoquant du fait de l'onde de choc transmise à la bande, le décollage de la bande de l'un des ensembles.

Ce type de dispositif est satisfaisant car les niveaux de chocs engendrés sont nettement inférieurs à ceux engendrés dans le cas de la découpe d'une pièce. Par conséquent, la charge pyrotechnique peut être réduite, les contraintes imposés aux éléments à séparer et aux autres systèmes périphériques sont alors plus faibles. Les dispositifs dissipateurs ne sont plus nécessaires ou peuvent avoir une taille réduite. La masse de la liaison peut alors être réduite.

Cependant, dans le cas où le matériau de la pièce de laquelle la bande se décolle est en matériau composite, i.e. en un matériau formé d'un empilement de couches de fibres noyées dans une résine, il existe un risque d'arrachement d'une ou plusieurs couches du matériau composite, cet arrachement de fibres provoquant une pollution, qui est particulièrement préjudiciable pour les systèmes environnant, comme les viseurs stellaires ou pour la charge utile.

C'est par conséquent un but de la présente invention d'offrir un dispositif de liaison provisoire et de séparation offrant une séparation dont le niveau de choc est réduit et engendrant une pollution limitée.

### EXPOSÉ DE L'INVENTION

Le but précédemment énoncé est atteint par un dispositif selon la revendication 1, notamment par un dispositif de liaison provisoire et de séparation entre deux pièces reliées par deux éléments de liaison métalliques, l'une des pièces est en matériau composite munie de plusieurs couches, la séparation étant obtenue par décollement d'au moins une des couches extérieures de ladite pièce, dit pli fusible, la séparation s'effectue donc avec une émission d'éléments polluants réduite. Pour cela, la surface de collage de la partie de la ou des couche(s) destinée(s) à être séparée(s) du reste de l'empilement est inférieure aux surfaces de liaison entre les couches intérieures entre elles.

En d'autres termes, il ne s'agit pas d'une séparation par décollement entre deux pièces, mais d'une séparation par pelage au sein d'une pièce en matériau composite, de manière maîtrisée.

De manière particulièrement avantageuse, la liaison entre les éléments de liaison métalliques et la pièce composite comporte une couche en matériau élastomère collée par une face sur le pli extérieur fusible et par l'autre face sur l'élément de liaison métallique.

La présente invention a alors principalement pour objet un dispositif de liaison provisoire d'axe longitudinal et de séparation pyrotechnique comprenant un tube à expansion pyrotechnique monté dans un espace ménagé dans une zone de liaison entre un premier et un deuxième ensemble à séparer, le deuxième ensemble étant formé d'un empilement de plis collés entre eux, ledit empilement comportant deux plis extérieurs et des plis intérieurs, lesdits plis étant sensiblement parallèles à la direction longitudinale, les deux ensembles étant liés l'un à l'autre par au moins une pièce métallique, ladite pièce métallique étant fixée sur le premier ensemble et collée sur un des plis extérieurs du deuxième ensemble, caractérisé en ce que la surface de collage entre ledit pli extérieur et le pli intérieur adjacent est inférieure à la surface de collage entre deux plis intérieurs formant un pli fusible, et en ce que la surface de collage entre la pièce métallique et le pli extérieur est inférieure ou égale à la surface du pli extérieur, de sorte que, lors de la mise en oeuvre du tube à expansion pyrotechnique, le pli extérieur se décolle du pli intérieur adjacent.

De manière particulièrement avantageuse, la liaison par collage entre la pièce métallique et le pli extérieur comporte une âme en élastomère collée par une face sur la pièce métallique et par l'autre face sur le pli extérieur.

Dans un exemple de réalisation, le dispositif selon l'invention peut comporter deux pièces métalliques reliant le premier et le deuxième ensemble, et le deuxième ensemble comporte deux plis extérieurs fusibles.

Dans un autre exemple de réalisation, le premier ensemble et le logement pour le tube pyrotechnique sont d'un seul tenant, le deuxième ensemble étant en appui sur le premier ensemble ou séparé de celui-ci d'un faible jeu.

Dans un autre exemple de réalisation, le dispositif selon la présente invention peut comporter deux pièces métalliques, une pièce métallique étant collée sur un pli extérieur du premier ensemble et fixée sur le deuxième ensemble, et l'autre pièce métallique étant fixée sur le deuxième ensemble et collée sur le pli extérieur du premier ensemble, le dispositif formant une liaison alternée permettant un dégagement latéral d'un des ensembles lors de la séparation.

Le ou les pièces métalliques sont fixées sur le premier ou le deuxième ensemble par exemple par boulonnage.

Le premier ensemble est par exemple en matériau composite ou en matériau métallique. La ou les pièces métalliques sont, par exemple en acier ou en aluminium.

La présente invention a également pour objet l'utilisation d'au moins un dispositif selon la présente invention pour assembler provisoirement des éléments d'un lanceur spatial. Les éléments peuvent avoir une forme courbée, plusieurs dispositifs de liaison provisoire étant alors être mis en oeuvre de sorte à former une liaison sectorisée.

### BRÈVE DESCRIPTION DES DESSINS

La présente invention sera mieux comprise à l'aide de la description qui va suivre et des dessins en annexe, sur lesquels :
- la figure 1A est une vue en coupe longitudinale d'un premier exemple de réalisation d'un dispositif de liaison provisoire et de séparation selon la présente invention, dans un état de liaison,
- la figure 1B est une vue du dispositif de la figure 1A dans un état de séparation,
- la figure 2A est une vue en coupe longitudinale d'un deuxième exemple de réalisation d'un dispositif selon la présente invention dans un état de liaison,
- la figure 2B est une vue du dispositif de la figure 2A dans un état de séparation,
- la figure 3 est une vue en coupe longitudinale d'un exemple de réalisation d'une liaison dite alternée selon la présente invention,
- la figure 4 est une représentation schématique de deux étages d'un lanceur solidarisés par des liaisons sectorisées auxquelles peut s'appliquer l'invention.

### EXPOSÉ DÉTAILLÉ DE MODES DE RÉALISATION PARTICULIERS

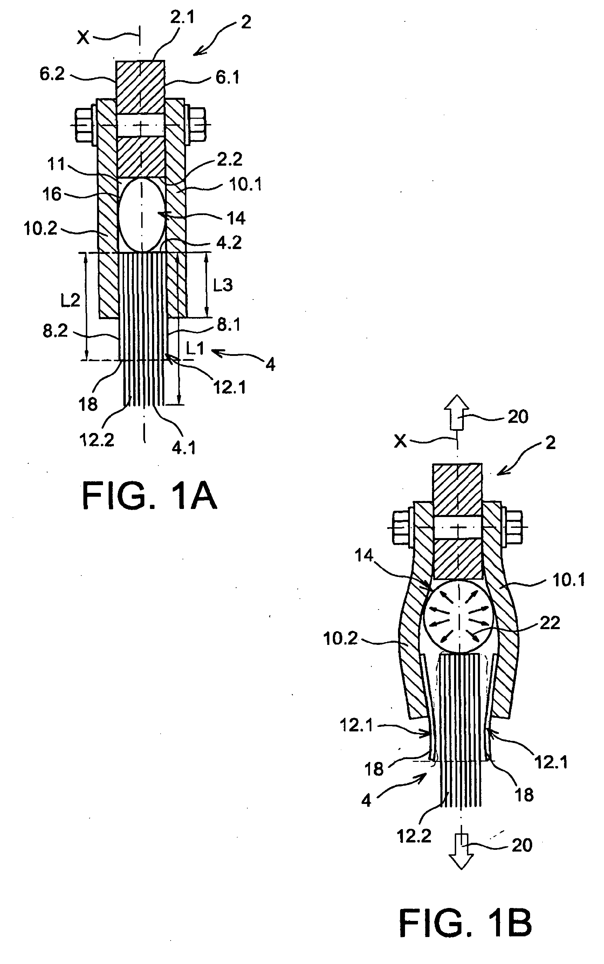

Sur la figure 1A, on peut voir un premier exemple d'un dispositif de liaison provisoire et de séparation de deux ensembles 2, 4 selon la présente invention.

Les ensembles 2 et 4 sont des ensembles structurels que l'on souhaite maintenir assemblés pendant un temps donné et, ensuite, que l'on souhaite séparer. Par exemple, il peut s'agir de deux étages d'un lanceur que l'on souhaite séparer après le lancement.

Dans l'exemple représenté, les deux ensembles 2, 4 sont assemblés selon une direction longitudinale X.

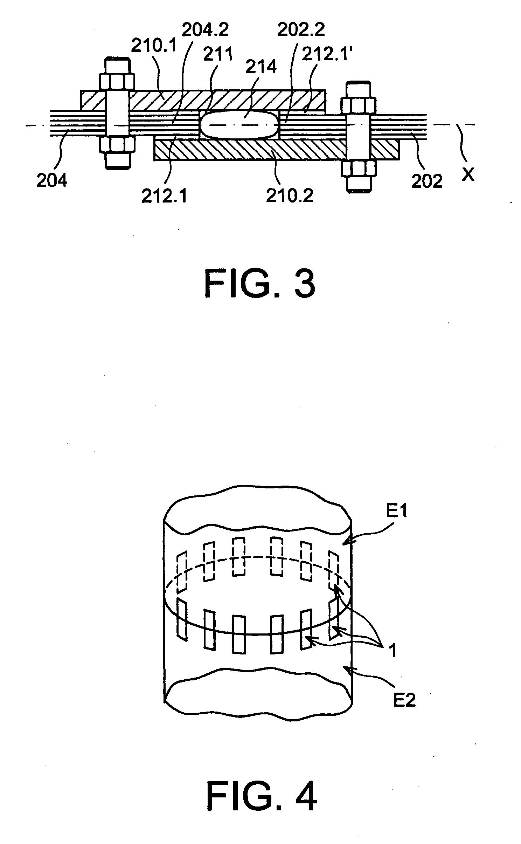

Sur la figure 4, on peut voir une représentation schématique partielle de deux étages E1, E2 d'un lanceur et des dispositifs de liaison 1 selon la présente invention. Dans cet exemple, les ensembles 2, 4 sont formés pas deux plaques incurvées, plus précisément cylindriques.

La présente invention s'applique bien entendu à la liaison de plaques planes.

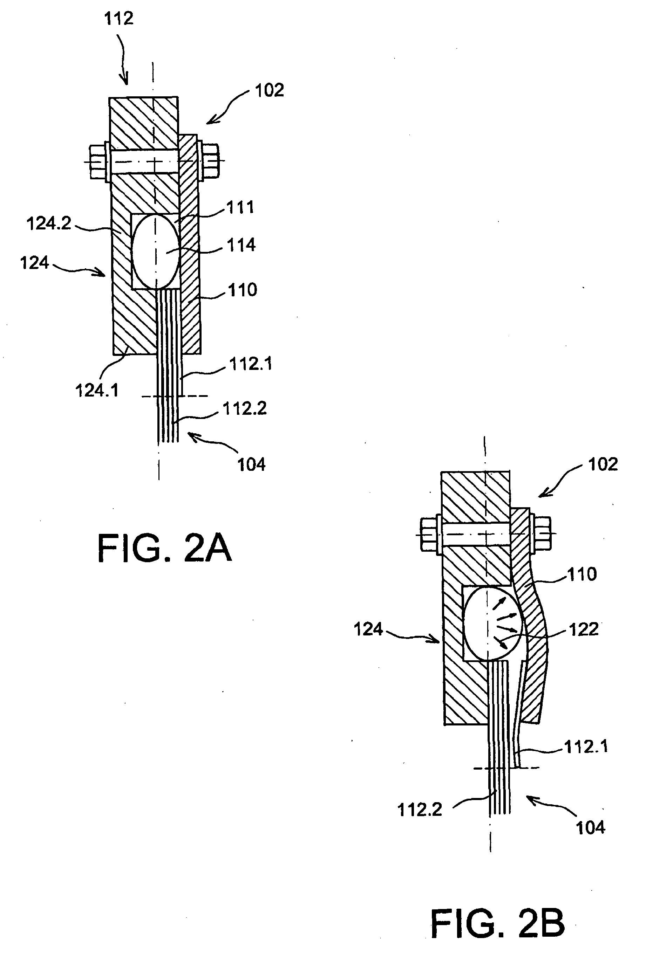

Sur les figures 1A et 1B, 2A et 2B, on peut voir deux vues en coupe longitudinales d'exemples de réalisation d'un dispositif de liaison selon l'invention. Dans la suite de la description, nous désignerons chaque ensemble 2, 4 par « plaque » à des fins de simplicité.

Nous utiliserons les adjectifs « distale » et « proximale » pour qualifier la position des extrémités des ensembles 2, 4 par rapport à la zone de liaison des deux ensembles 2, 4.

La plaque 2 comporte une extrémité distale 2.1 et une extrémité proximale 2.2 reliées par deux faces 6.1, 6.2, et l'ensemble 4 comporte une extrémité distale 4.1 et une extrémité proximale 4.2 reliées par deux faces 8.1, 8.2. Les extrémités proximales 2.2, 4.2 sont disposées en vis-à-vis à distance l'une de l'autre de sorte à ménager un espace 11. Le dispositif de liaison comporte deux bandes ou éclisses 10.1, 10.2 chevauchant la zone de séparation entre les deux ensembles 2, 4. La bande 10.1 relie la face 6.1 et la face 8.1, et la bande 10.2 relie la face 6.2 et la face 8.2.

Dans l'exemple représenté, les bandes 10.1, 10.2 sont fixées sur la plaque 2 au moyen d'une liaison boulonnée. Mais il est bien entendu que d'autres types de liaison peuvent convenir.

Selon la présente invention, le matériau utilisé pour réaliser l'ensemble 4 est un matériau composite formé par un empilement de plis, dont les plis les plus extérieurs de l'empilement sont aptes à se séparer du reste de l'empilement. Les bandes 10.1, 10.2 sont fixées sur les plis extérieurs 12.1 de la plaque 4 par collage. Les plis extérieurs 12.1 seront désignés dans la suite de la description par « plis fusibles ».

Les plis sont disposés de sorte à être sensiblement alignés avec l'axe longitudinal X de la liaison et à être orientées transversalement par rapport à l'effort appliqué lors de la mise en oeuvre du tube à expansion pyrotechnique, comme nous le verrons par la suite.

Chaque pli est formé de fibres alignées ou tissées. Par exemple, la plaque 4 est formée de plis unidirectionnels orientés dans la direction des efforts de traction et de compression, les plis étant noyés dans une matrice de résine thermodurcissable.

Selon la présente invention, on prévoit de décoller uniquement les plis les plus extérieurs 12.1 de l'empilement.

En considérant la direction longitudinale X, les plis intérieurs présentent une longueur L1. La zone de collage entre les plis extérieurs fusibles 12.1 et les plus intérieurs 12.2 présente une longueur L2. La zone de collage entre les plis extérieures 1 fusibles 2.1 et les bandes 10.1, 10.2 présente une longueur L3.

Selon la présente invention, L2 est inférieure à L1 et L2 est supérieure ou égale à L3.

Ainsi, on maîtrise le décollement des plis extérieurs 12.1 par rapport aux plis intérieurs 12.2.

Dans la présente description, on parle de longueur de zone de collage en se rapportant aux vues en coupe à des fins de simplicité. Cependant il est bien entendu que le zones de collage sont surfaciques et que les relations ci-dessus entre les longueurs se transposent aux surfaces de collage.

Les bandes de liaison 10.1, 10.2 sont en matériau métallique, par exemple en aluminium ou en acier.

La plaque 2 peut être réalisée en tout matériau adapté, par exemple en alliage métallique ou en matériau composite afin de réduire la masse de l'ensemble.

Le choix du type de liaison entre les bandes 10.1, 10.2 et l'ensemble 2 est effectué en fonction des contraintes de traction et de compression auxquelles la liaison va être soumise.

La liaison entre les bandes 10.1, 10.2 et les plis extérieurs 12.1 est obtenu par collage. De manière particulièrement avantageuse, cette liaison comporte une partie en élastomère sous forme de plaque collée par une face sur une bande 10.1, 10.2 et par une autre face sur un pli extérieur 12.1. La présence de l'élastomère assure une augmentation de la tenue de la charge en cisaillement et absorbe une partie de l'onde de choc générée par l'explosion de la charge pyrotechnique, ce qui réduit les risques d'endommagement des systèmes environnants.

Le logement 11, ménagé entre les deux extrémités proximales 6.2, 8.2 des plaques 2, 4 et les deux bandes de liaison 10.1, 10.2, reçoit un tube à expansion pyrotechnique 14. Ce tube 14 est similaire à ceux de l'état de la technique et connus de l'homme du métier.

Pour faciliter la compréhension, il est simplement rappelé que le tube 14 à expansion pyrotechnique comprend une enveloppe métallique 16 étanche et déformable, un cordeau détonant (non représenté), ainsi qu'un matériau souple (non représenté) interposé entre le cordeau détonant et l'enveloppe 16. Le matériau souple a notamment pour fonction de centrer le cordeau détonant à l'intérieur de l'enveloppe. A titre d'exemple, il peut être réalisé en caoutchouc silicone. Avant la mise à feu l'enveloppe 16 présente une forme générale oblongue (figure 1A), par exemple en forme de cercle aplati ou d'ovale. Le logement 11 a sensiblement une section rectangulaire adaptée à la section oblongue du tube, de sorte que la plus petite dimension de la section oblongue du tube 14 soit sensiblement orthogonale aux surfaces des deux bandes 10.1, 10.2.

Il est bien entendu que la présente invention ne se limite pas au cas où le tube à expansion pyrotechnique est rectiligne, les cas où le tube est incurvé, par exemple pour s'adapter à la forme incurvée des plaques, comme les plaques de la figure 4, ne sort pas du cadre de la présente invention.

Pratiquement, la plaque 4 peut être réalisée selon différents procédés.

Par exemple, on réalise un empilement de n plis 12.2 de fibres présentant sensiblement la même surface, et.plus particulièrement la même longueur, et deux plis 12.1 de surface réduite, plus particulièrement de longueur L2 réduite, disposés sur chacune des faces extérieures de l'empilement de n plis. On noie ensuite cet empilement de n + 2 plis dans une résine selon un procédé connu.

L'extrémité distale des plis extérieurs 12.1 désignée par la référence 18 est visible sur la figure 1A.

Le tube à expansion pyrotechnique présente un dimensionnement réduit adapté à l'effort à appliquer pour décoller les plis du matériau composite. Il engendre donc un niveau de choc sensiblement moindre que les tubes utilisés dans les dispositifs de découpe de pièces métalliques.

Dans l'exemple représenté, les faces 6.1 et 8.1 des deux plaques 2, 4, et les faces 6.2 et 8.2 des deux plaques 2, 4 sont respectivement disposées sensiblement dans un même plan. Mais cette configuration n'est en aucun cas limitative. On pourrait prévoir par exemple que la plaque du premier ensemble 2 soit plus épaisse que celle du deuxième ensemble 4 ou inversement. Dans ce cas les bandes seraient à l'état assemblées déformées et/ou présenteraient une épaisseur variable.

Nous allons maintenant expliquer le fonctionnement du dispositif selon la présente invention.

Les deux plaques 2, 4 sont assemblées provisoirement au moyen des bandes de liaison 10.1 et 10.2, ces bandes assurant les tenues en traction et en compression requises.

Lorsque la séparation des deux plaques 2, 4 est souhaitée, la charge pyrotechnique est enflammée, ce qui provoque la génération d'une onde de choc qui est transmise aux bandes 10.1, 10.2 et à la plaque 4. Il y a également une génération de gaz et l'expansion de l'enveloppe 14 du tube d'expansion 11. Cette expansion s'effectue principalement dans une direction transversale aux bandes, comme cela est symbolisé par les flèches 22 sur la figure 1B.

L'onde de choc a pour effet de provoquer le décollement des plis extérieurs 12.1 par rapport aux plis intérieurs 12.2. Le décollement apparaît en premier lieu au niveau de l'extrémité distale 18 des plis extérieurs 12.1 et se propage jusqu'à l'extrémité proximale du pli fusible sur la longueur L2

De plus, l'enveloppe 14, du fait de son expansion, applique des efforts sensiblement transversaux sur les bandes 8, 10. Ces efforts provoquent l'écartement des plis extérieurs fusibles par rapport aux plis intérieurs. Cet exemple de réalisation présente l'avantage de laisser les bandes solidaires d'un des éléments, ce qui réduit la pollution.

C'est essentiellement l'onde de choc qui provoque le pelage des plis, l'effort mécanique appliqué par l'enveloppe du tube pouvant participer au décollement et à l'écartement des plis extérieurs fusibles ou uniquement à l'écartement des plis extérieurs fusibles.

Dans l'exemple représenté, l'extrémité distale des plis extérieurs fusibles 12.1 dépasse des bandes de liaison 10.1, 10.2, mais il est bien entendu que l'extrémité distale 18 des plis extérieurs fusibles 12.1 peut se situer au même niveau que l'extrémité des bandes ou en retrait de celles-ci.

La longueur L2 des plis extérieurs est choisie suffisamment petite par rapport à la longueur L1 des plis extérieurs pour être sûr d'effectuer la séparation des plis extérieurs des plis intérieurs.

A titre d'exemple, la longueur de collage est comprise entre quelques mm à quelques dizaines de cm. Le pli fusible peut dépasser de l'extrémité de la bande de liaison de quelques cm ou être en retrait de celle-ci de quelques mm.

Sur les figures 2A et 2B, on peut voir un autre exemple de réalisation dans lequel une seule bande de liaison est utilisée. Dans ce cas, la liaison selon l'invention présente des dimensions plus grandes afin d'assurer une liaison sûre.

Dans cet autre exemple, la liaison comporte une bande 110 fixée sur le premier ensemble 102 et collée sur le deuxième ensemble 104, et une pièce d'appui 124 fixée sur le premier ensemble 102, le tube pyrotechnique 114 étant disposé dans un logement 111 ménagé entre la pièce d'appui 124 et le deuxième ensemble 104.

Dans l'exemple représenté, la pièce d'appui 124 et le premier ensemble 102 sont d'un seul tenant, et comportent un évidement délimitant sur trois côtés le logement 111, le quatrième côté étant formé par la bande 110.

La bande 110 est fixée par une première extrémité au premier ensemble 102 par boulonnage, et est collée sur la plaque 104.

Soit la plaque 104 est en appui sur la pièce d'appui 124, soit un jeu faible est prévu entre la plaque 104 et la pièce d'appui 124.

Le tube pyrotechnique 114 est disposé dans l'évidement 111.

Dans cet exemple de réalisation, seule la face de la plaque 104 sur laquelle la bande 110 est collée comporte un pli fusible 112.1 dont le décollement est facilité. Ce pli fusible 112.1 est similaire à ceux décrits en relation avec le premier exemple.

Nous allons maintenant expliquer la séparation des deux ensembles.

Lorsque la séparation est désirée, le tube pyrotechnique 114 est allumé. Lors de l'explosion, une onde de choc est générée qui est appliquée à la bande 110 et à la plaque 102, provoquant le décollement total ou partiel du pli fusible 112.1. L'enveloppe se gonfle sous l'effet des gaz et applique des efforts radiaux 122 sur la pièce d'appui 124, et sur la bande 110. Ces efforts radiaux 122 ont pour effet de provoquer la fin du décollement du pli fusible si nécessaire, et l'écartement du pli fusible par rapport aux plis intérieurs 112.2.

Le dispositif de liaison provisoire et de séparation selon la présente invention présente l'avantage d'assurer une séparation certaine lorsque la charge pyrotechnique est enflammée.

Ce dispositif de liaison provisoire et de séparation permet également de réduire les risques de pollution.

Ce dispositif est de réalisation simple et légère.

Par ailleurs, le tube à expansion pyrotechnique pouvant être de puissance réduite, le niveau de choc engendré sur les éléments environnants est diminué.

La masse du dispositif est également réduite car le tube à expansion pyrotechnique est moins encombrant et les dissipateurs de choc sont supprimés ou de taille réduite.

La présente invention peut également être appliquée à une liaison, dite alternée, qui est notamment utilisée lorsqu'on souhaite provoquer un dégagement latéral de l'ensemble qui est détaché.

Sur la figure 3, on peut voir un exemple de représentation d'une telle liaison.

Cette liaison comporte deux plaques 202, 204 en matériau composite reliées par des bandes de liaison métalliques 210.1, 210.2. Les deux extrémités proximales 202.2 et 204.2 sont disposées en regard à distance de sorte à ménager un logement 211 pour le tube pyrotechnique 214.

La bande 210.1 est fixée par un ensemble vis-écrou sur la plaque 202 et collée sur la plaque 204, et la bande 210.2 est fixée par un ensemble vis-écrou sur la plaque 204 et collée sur la plaque 202. Comme pour les autres modes de réalisation, chaque plaque 202, 204 comporte un pli extérieur fusible 212.1, 212.1' respectivement sur lequel est collée la plaque 202, 204 respectivement.

Lors de l'activation du tube pyrotechnique, le pli fusible 212.1 se décolle de la plaque 202 et le pli fusible 212.1' se décolle de la plaque 204. Ce type d'architecture permet d'assurer un dégagement latéral de la partie détachée.

Les ensembles 202, 204 peuvent avoir des formes courbées ou cylindriques. Dans ce cas, les liaisons selon la présente invention se présentent sous la forme de secteur, i.e. plusieurs bandes de liaison sont réparties sur tout le contour des ensembles solidarisés provisoirement.

La présente invention s'applique notamment à la liaison et à la désolidarisation d'éléments d'un lanceur spatial.

## Revendications

1. Dispositif de liaison provisoire d'axe longitudinal (X) et de séparation pyrotechnique avec un ensemble (4, 104 104), ledit dispositif comprenant un tube à expansion pyrotechnique (14, 114, 214) monté dans un espace (11, 111, 211) ménagé dans une zone de liaison entre ledit ensemble (4, 104, 204) et un autre ensemble (2, 102 , 202) à séparer dudit ensemble, le dispositif comprenant en outre au moins une pièce métallique (10.1, 10.2, 110, 210.1, 210.2), ledit ensemble (4, 104, 204) étant formé d'un empilement de plis (12.1, 12.2, 112.1, 112.2, 212.1, 212.2) collés entre eux, ledit empilement comportant deux plis extérieurs (12.1, 112.1) et des plis intérieurs (12.2, 112.2), lesdits plis (12.1, 12.2, 112.1, 112.2, 212.1, 212.2) étant sensiblement parallèles à la direction longitudinale (X), les deux ensembles (2, 4, 102, 104) étant liables l'un à l'autre par au moins une pièce métallique (10.1, 10.2, 110, 210.1, 210.2), ladite pièce métallique étant fixable sur l'autre ensemble (2, 102, 202) et collée sur un des plis extérieurs (12.1, 112.1, 212.1) dudit ensemble (4, 104, 204), **caractérisé en ce que** la surface de collage entre ledit pli extérieur (12.1, 112.1, 212.1) et le pli intérieur (12.2, 112.2, 212.2) adjacent est inférieure à la surface de collage entre deux plis intérieurs (12.2, 112.2, 212.2) formant un pli fusible, et **en ce que** la surface de collage entre la pièce métallique (10.1, 10.2, 110, 210.1, 210.2) et le pli extérieur (12.1, 112.1, 212.1) est inférieure ou égale à la surface du pli extérieur (12.1, 112.1, 212.1), de sorte que, lors de la mise en oeuvre du tube à expansion pyrotechnique (14, 114, 214), le pli extérieur (12.1, 112.1, 212.1) se décolle du pli intérieur adjacent.

2. Dispositif selon la revendication 1, dans lequel la liaison par collage entre la pièce métallique (10.1, 10.2, 110, 210.1, 210.2) et le pli extérieur (12.1, 112.1, 212.1) comporte une âme en élastomère collée par une face sur la pièce métallique (10.1, 10.2, 110, 210.1, 210.2) et par l'autre face sur le pli extérieur (12.1, 112.1, 212.1).

3. Dispositif selon la revendication 1 ou 2, comportant deux pièces métalliques (10.1, 10.2) destinées à relier ledit ensemble (4) et l'autre ensemble (2), et ledit ensemble (4) comporte deux plis extérieurs fusibles (12.1).

4. Dispositif selon l'une des revendications 1 à 3, dans lequel la ou les pièces métalliques (10.1, 10.2, 110, 210.1, 210.2) sont en acier ou en aluminium.

5. Dispositif selon l'une des revendications 1 à 4, dans lequel la ou les pièces métalliques (10.1, 10.2, 110, 210.1, 210.2) sont fixées sur ledit ou l'autre ensemble (2, 4, 102, 104, 202, 204) par boulonnage.

6. Système comportant un dispositif selon la revendication 1 ou 2 et l'autre ensemble, dans lequel l'autre ensemble (102) et l'espace (111) pour le tube pyrotechnique (114) sont d'un seul tenant, ledit ensemble (104) étant en appui sur l'autre ensemble (102) ou séparé de celui-ci d'un faible jeu.

7. Système comportant un dispositif selon la revendication 1 ou 2, l'autre ensemble (202) et deux pièces métalliques (210.1, 210.2), une pièce métallique (210.1) étant collée sur un pli extérieur (212.1') de l'autre ensemble (202) et fixée sur ledit ensemble (204), et l'autre pièce métallique (210.2) étant fixée sur l'autre ensemble (202) et collée sur le pli extérieur (212.1) dudit ensemble (202), le dispositif formant une liaison alternée permettant un dégagement latéral d'un des ensembles lors de la séparation.

8. Système selon la revendication 7, dans lequel la ou les pièces métalliques (10.1, 10.2, 110, 210.1, 210.2) sont fixées sur ledit ou l'autre ensemble (2, 4, 102, 104, 202, 204) par boulonnage.

9. Système selon la revendication 6, 7 ou 8, dans lequel l'autre ensemble (2, 102, 202) est en matériau composite ou en matériau métallique.

10. Utilisation d'au moins un dispositif selon l'une des revendications 1 à 5 pour assembler provisoirement des éléments d'un lanceur spatial.

11. Utilisation selon la revendication précédente, dans lequel les éléments ont une forme courbée, plusieurs dispositifs de liaison provisoire étant mis en oeuvre de sorte à former une liaison sectorisée.

## Patentansprüche

1. Vorrichtung zur vorübergehenden Verbindung mit longitudinaler Achse (X) und zur pyrotechnischen Trennung mit einer Anordnung (4, 104, 204), wobei die Vorrichtung ein Rohr zur pyrotechnischen Expansion (14, 114, 214) umfasst, das in einem Raum (11, 111, 211) montiert ist, welcher in einer Verbindungszone zwischen der Anordnung (4, 104, 204) und einer von der Anordnung zu trennenden anderen Anordnung (2, 102, 202) untergebracht ist, wobei die Vorrichtung ferner wenigstens ein Metallteil (10.1, 10.2, 110, 210.1, 210.2) umfasst, wobei die Anordnung (4, 104, 204) aus einem Stapel von miteinander verklebten Lagen (12.1, 12.2, 112.1, 112.2, 212.1, 212.2) gebildet ist, wobei der Stapel zwei Außenlagen (12.1, 112.1) und Innenlagen (12.2, 112.2) umfasst, wobei die Lagen (12.1, 12.2, 112.1, 112.2, 212.1, 212.2) im Wesentlichen parallel zur longitudinalen Richtung (X) sind, wobei die zwei Anordnungen (2, 4, 102, 104) miteinander durch das wenigstens eine Metallteil (10.1, 10.2, 110, 210.1, 210.2) verbindbar sind, wobei das Metallteil an der anderen Anordnung (2, 102, 202) befestigbar und an einer der Außenlagen (12.1, 112.1, 212.1) der Anordnung (4, 104, 204) geklebt ist, **dadurch gekennzeichnet, dass** die Verklebungsfläche zwischen der Außenlage (12.1, 112.1, 212.1) und der angrenzenden Innenlage (12.2, 112.2, 212.2) kleiner ist als die Verklebungsfläche zwischen zwei Innenlagen (12.2, 112.2, 212.2), die eine Sicherungslage bilden, und dass die Verklebungsfläche zwischen dem Metallteil (10.1, 10.2, 110, 210.1, 210.2) und der Außenlage (12.1, 112.1, 212.1) kleiner oder gleich der Fläche der Außenlage (12.1, 112.1, 212.1) ist, derart, dass sich bei der Verwendung des Rohrs zur pyrotechnischen Expansion (14, 114, 214) die Außenlage (12.1, 112.1, 212.1) von der angrenzenden Innenlage löst.

2. Vorrichtung nach Anspruch 1, bei der die Klebverbindung zwischen dem Metallteil (10.1, 10.2, 110, 210.1, 210.2) und der Außenlage (12.1, 112.1, 212.1) einen Elastormersteg umfasst, der an einer Seite an das Metallteil (10.1, 10.2, 110, 210.1, 210.2) und an der anderen Seite an die Außenlage (12.1, 112.1, 212.1) geklebt ist.

3. Vorrichtung nach Anspruch 1 oder 2, umfassend zwei Metallteile (10.1, 10.2), die die Anordnung (4) und die andere Anordnung (2) verbinden bestimmt sind, und wobei die Anordnung (4) zwei Außensicherungslagen (12.1) umfasst.

4. Vorrichtung nach Anspruch 1 bis 3, bei der das oder die Metallteil(e) (10.1, 10.2, 110, 210.1, 210.2) aus Stahl oder aus Aluminium ist/sind.

5. Vorrichtung nach einem der Ansprüche 1 bis 4, bei der das oder die Metallteil(e) (10.1, 10.2, 110, 210.1, 210.2) an der oder an der anderen Anordnung (2, 4, 102, 104, 202, 204) durch Bolzenverbindung befestigt sind.

6. System, umfassend eine Vorrichtung nach Anspruch 1 oder 2 und die andere Anordnung, wobei die andere Anordnung (102) und die Aufnahme (111) für das pyrotechnische Rohr (114) einstückig sind, wobei die Anordnung (104) an der anderen Anordnung (102) anliegt oder von dieser mit geringem Spiel getrennt ist.

7. System, umfassend eine Vorrichtung nach Anspruch 1 oder 2, die andere Anordnung (202) sowie zwei Metallteile (210.1, 210.2), wobei ein Metallteil (210.1) an eine Außenlage (212.1') der anderen Anordnung (202) geklebt und an der Anordnung (204) befestigt ist, und wobei das andere Metallteil (210.2) an der anderen Anordnung (202) befestigt und an die Außenlage (212.1) der Anordnung (202) geklebt ist, wobei die Vorrichtung eine alternierende Verbindung bildet, die eine laterale Freigabe einer der Anordnungen während der Separation erlaubt.

8. System nach Anspruch 7, bei der das oder die Metallteil(e) (10.1, 10.2, 110, 210.1, 210.2) an der oder an der anderen Anordnung (2, 4, 102, 104, 202, 204) durch Bolzenverbindung befestigt sind.

9. Vorrichtung nach Anspruch 6, 7 oder 8, bei der die andere Anordnung (2, 102, 202) aus Verbundmaterial oder aus Metallmaterial ist.

10. Verwendung wenigstens einer Vorrichtung nach einem der Ansprüche 1 bis 5 zur vorübergehenden Montage der Elemente einer Raumfahrt-Trägerrakete.

11. Verwendung nach dem vorhergehenden Anspruch, bei der die Elemente eine gekrümmte Form haben, wobei mehrere Vorrichtungen zur vorübergehenden Verbindung derart verwendet werden, dass sie eine in Bereiche unterteilte Verbindung bilden.

## Claims

1. A device forming a temporary connection with a assembly (4, 104, 204) and able to be separated from this assembly in a pyrotechnic manner, this temporary connection comprising a longitudinal axis (X), said device comprising a pyrotechnic expansion tube (14, 114, 214) mounted in a space (11, 111, 211) formed in a connection zone between said assembly (4, 104,204) and another assembly (2, 102, 202) to be separated from said assembly, the device also comprising at least one metal part (10.1, 10.2, 110, 210.1, 210.2), said assembly (4, 104, 204) being formed of a stack of plies (12.1, 12.2, 112.1, 112.2, 212.1, 212.2) bonded together, said stack comprising two outer plies (12.1, 112.1) and inner plies (12.2, 112.2), said plies (12.1, 12.2, 112.1, 112.2, 212.1, 212.2) being approximately parallel to the longitudinal direction (X), the two assemblies (2, 4, 102, 104) being connectable to each other by at least one metal part10.1, 10.2, 110, 210.1, 210.2), said metal part being able to be fixed onto the another assembly and to be bonded onto one of the outer plies (12.1, 112.1, 212.1) of the second assembly (4, 104, 204), **characterised in that** the bonding area between said outer ply (12.1, 112.1, 212.1) and the inner ply (12.2, 112.2, 212.2) adjacent to it is smaller than the bonding area between two inner plies (12.2, 112.2, 212.2) forming a fuse ply, and **in that** the bonding area between the metal part (10.1, 10.2, 110, 210.1, 210.2) and the outer ply (12.1, 112.1, 212.1) is smaller than or equal to the area of the outer ply (12.1, 112.1, 212.1), such that when the pyrotechnic expansion tube is used (14, 114, 214), the outer ply (12.1, 112.1, 212.1) becomes delaminated from the adjacent inner ply.

2. Device according to claim 1, in which the bonded connection between the metal part (10.1, 10.2, 110, 210.1, 210.2) and the outer ply (12.1, 112.1, 212.1) comprises an elastomer core with one face bonded onto the metal part (10.1, 10.2, 110, 210.1, 210.2) and the other face bonded onto the outer ply (12.1, 112.1, 212.1).

3. Device according to claim 1 or 2, comprising two metal parts (10.1, 10.2) configured to be connected to the first and the second assembly (2, 4), and the second assembly (4) comprises two fuse outer plies (12.1).

4. Device according to one of claims 1 to 3, in which the metal part(s) (10.1, 10.2, 110, 210.1, 210.2) is (are) made of steel or aluminium.

5. Device according to one of claims 1 to 4, in which the metal part(s) (10.1, 10.2, 110, 210.1, 210.2) is (are) fixed on the first or second assembly (2, 4, 102, 104, 202, 204) by bolting.

6. System comprising a device according to claim 1 or 2 and the other assembly, in which the first assembly (102) and the housing (111) for the pyrotechnic tube (114) are made from a single piece, the second assembly (104) bearing on the first assembly (102) or being separated from it by a small clearance.

7. System comprising a device according to claim 1 or 2, the other assembly and two metal parts (210.1, 210.2), one metal part (210.1) being bonded onto an outer ply (212.1') of the first assembly (202) and fixed onto the second assembly (204), and the other metal part (210.2) being fixed to the second assembly (204) and bonded onto the outer ply (212.1) of the first assembly (202), the device forming an alternate connection enabling lateral movement of one of the assemblies during separation.

8. System according to claim 7, in which the metal part(s) (10.1, 10.2, 110, 210.1, 210.2) is (are) fixed on the first or second assembly (2, 4, 102, 104, 202, 204) by bolting.

9. Device according to claim 6, 7 or 8, in which the first assembly (2, 102, 202) is made of a composite or metallic material.

10. Use of at least one device according to one of claims 1 to 5 to temporarily assemble elements of a space launcher.

11. Use according to the previous claim, in which the elements are curved in shape, several temporary connection devices being used so as to form a sectorised connection.
